# EUROPEAN PATENT SPECIFICATION

(11) **EP 3 471 172 B1**
(45) Date of publication and mention of the grant of the patent: **06.05.2020**
(21) Application number: 17196059.4
(22) Date of filing: 12.10.2017
(51) Int. Cl.: H01M 2/20, H01M 2/34, H01M 10/48, H01M 10/42

(54) **DISCONNECTABLE BUS BAR FOR A BATTERY SYSTEM AND BATTERY SYSTEM INCLUDING THE SAME**
LÖSBARE SAMMELSCHIENE FÜR EIN BATTERIESYSTEM UND BATTERIESYSTEM DAMIT
BARRE OMNIBUS DÉCONNECTABLE POUR UN SYSTÈME DE BATTERIE ET SYSTÈME DE BATTERIE LA COMPRENANT

(43) Date of publication of application: 17.04.2019
(73) Proprietor: Samsung SDI Co., Ltd., Yongin-si, Gyeonggi-do 17084 (KR)
(72) Inventor: Cotic, Urban, 2344 Lovrenc na Pohorju (SI); Hofer, Maximilian, 8230 Hartberg (AT)
(74) Representative: Gulde & Partner

(56) References cited:
- WO-A1-2017/150088
- JP-A- 2016 100 186
- US-A1- 2014 093 752

## Description

### Field of the Invention

The present invention relates to a bus bar for a battery system, particularly to a disconnectable bus bar comprising a relay switch for connecting/disconnecting the bus bar and monitoring pins for monitoring the relay. The invention further relates to a battery system comprising at least one disconnectable bus bar with integrated relay and monitoring pins.

### Technological Background

A rechargeable or secondary battery differs from a primary battery in that it can be repeatedly charged and discharged, while the latter provides only an irreversible conversion of chemical to electrical energy. Low-capacity rechargeable batteries are used as power supply for small electronic devices, such as cellular phones, notebook computers and camcorders, while high-capacity rechargeable batteries are used as the power supply for hybrid vehicles and the like.

In general, rechargeable batteries include an electrode assembly including a positive electrode, a negative electrode, and a separator interposed between the positive and negative electrodes, a case receiving the electrode assembly, and an electrode terminal electrically connected to the electrode assembly. An electrolyte solution is injected into the case in order to enable charging and discharging of the battery via an electrochemical reaction of the positive electrode, the negative electrode, and the electrolyte solution. The shape of the case, e.g. cylindrical or rectangular, depends on the battery's intended purpose.

Rechargeable batteries may be used as a battery module formed of a plurality of unit battery cells coupled in series and/or in parallel by a bus bar so as to provide a high energy density, e.g. for motor driving of a hybrid vehicle. Such battery modules may be mechanically and electrically integrated, equipped with a thermal management system and set up for communication with each other and one or more electrical consumers in order to form a battery system.

For meeting the dynamic power demands of various electrical consumers connected to the battery system a static control of battery power output and charging is not sufficient. Thus, steady or intermittent exchange of information between the battery system and the controllers of the electrical consumers is required. This information includes the battery systems actual state of charge (SoC), potential electrical performance, charging ability and internal resistance as well as actual or predicted power demands or surpluses of the consumers.

For monitoring, controlling and/or setting of the aforementioned parameters, a battery system usually comprises a battery management system (BMS). Such control unit may be an integral part of the battery system and disposed within a common housing or may be part of a remote control unit communicating with the battery system via a suitable communication bus. In both cases, the control unit may communicate with the electrical consumers via a suitable communication bus, e.g. a CAN or SPI interface.

A battery system may further comprise a protection system to provide a voltage level control of a power interface of the battery system and to enable a fast and reliable safety shutdown of the power interface in the case of non-permissible operating conditions. Such protection system may be adapted to shutdown an electrical connection between the serially connected cells and an external terminal of the battery system. A typical protection system comprises an electromechanical switch and a driving circuit, e.g. a relay with a corresponding relay circuit. The switch can be combined with a fuse that is serially connected to the switch and melts during a constant overload to backup the safety shutdown.

Protection systems based on relay switches and fuses have some disadvantages. In particular, as the mechanical parts of a relay are failure-prone, protection systems based thereon provide only a limited lifetime.

In order to overcome these disadvantages monitoring pins coupled between the bas bar and the printed circuit board (PCB) comprising the battery management system (BMS) may be used for controlling whether the relay is properly working. Further, the monitoring pins may be integrated inside the relay case and connector so that the monitoring pins are protected and installation space can be saved.

However, in case a short circuit between the monitoring pins and the coil control pins of the relay occurs, the electronics of the printed circuit board may be damaged.

It is thus an object of the present invention to overcome or reduce at least some of the drawbacks of the prior art and to provide monitoring pins for monitoring the functions of a relay switch and which can prevent damages to electronic components of the BMS.

### Summary of Invention

One or more of the drawbacks of the prior art can be avoided or at least reduced by means of the present invention. In particular, a disconnectable bus bar for a battery system is provided which includes a relay switch for interrupting the connection when abnormal conditions occur and monitoring pins for monitoring the proper working of the relay, wherein resistors are mounted along the monitoring pins to prevent damages to the control electronics in case of a short circuit.

According to an aspect of the present invention a disconnectable bus bar is provided comprising a first bar element and a second bar element that are spaced apart from each other, preferably along a length direction of the bus bar. The bus bar is configured to connect cell terminals of battery cells and/or battery cell modules within the battery system. Preferably, the bus bar is configured to electrically connect the terminals of battery cells with each other within the battery system. The bus bar comprises a first and second contacts electrically connected to the first and second bar elements, respectively, and spaced apart from each other, a relay configured to control a connection between the first and second contacts, and first and second monitoring pins electrically coupled to the first and second bar elements, respectively, and wherein each of the first and second monitoring pins comprises a resistor located between a first end and a second end of the monitoring pin. The monitoring pins may have the form of wires or elongated bars comprising a first end and a second end.

In other words, a resistor with well defined ohmic resistance is structurally and electrically integrated into each of the monitoring pins.

Preferably, the relay comprises a coil, first and second movable contacts connected to the coil and adapted to be moved by the coil, and a couple of coil controlling pins for driving the relay between a closed position and an open position. In the closed position the first and second movable contacts are electrically connected to the first and second contacts, respectively, and in the open position the first and second movable contacts are electrically disconnected from the first and second contacts. The first and second movable contacts are electrically connected to each other.

Preferably, a relay case is accommodating the relay and a connector part connected to the relay case is accommodating the coil controlling pins, for protecting the relay and the coil controlling pins from breakage. Preferably, the monitoring pins are also accommodated inside the relay case and the connector part.

Preferably, the resistors have a resistance value greater than 10 KΩ and smaller than 20KΩ. Preferably, a tolerance of the resistance value of the resistors is smaller than or equal to 1%. Preferably, wirewound resistors are used. The resistors may be configured to fuse and go to an open state in case of short circuit.

According to another aspect of the invention, a battery system is provided, comprising a battery module with a plurality of battery cells, wherein each battery cell has a first cell terminal of a first polarity and a second cell terminal of a second polarity different from the first polarity. The battery system comprises at least one bus bar as disclosed above for electrically interconnecting at least two of the plurality of battery cells and a battery management system for monitoring the plurality of battery cells and driving the battery module, wherein the connector part is connected to a printed circuit board comprising the battery management system and the battery management system is configured to drive the relay to switch between an open state and a closed state via the coil controlling pins and to monitor the state of the relay via the monitoring pins. In a preferred configuration, the first bar element of the bus bar may be electrically connected to one of the first and second cell terminals of a first battery cell of the plurality of battery cells and the second bar element of the bus bar may be electrically connected to one of the first and second cell terminals of a second battery cell of the plurality of battery cells.

Preferably, the battery management system comprises a relay driver connected to the coil control pins for driving the relay between an open state and a closed state, a relay monitoring system connected to the monitoring pins for monitoring the proper functioning of the relay, and a main control unit for controlling both the relay driver and the relay monitoring system. The relay monitoring system may be adapted to measure a voltage difference between the first monitoring pin and the second monitoring pin and to generate and send a relay failure signal to the main control unit when the relay is in a closed state and the voltage of the first monitoring pin is different from the voltage of the second monitoring pin.

Another aspect of the present invention relates to an electric vehicle, comprising a bus bar as described above and a battery system as described above. Further aspects of the present invention could be learned from the dependent claims or the following description.

### Brief Description of the Drawings

Features will become apparent to those of ordinary skill in the art by describing in detail exemplary embodiments with reference to the attached drawings in which:
Fig. 1 illustrates a schematic perspective view of a battery system including a conventional bus bar;
Fig. 2 illustrates a top view of a battery system including a bus bar according to an embodiment of the present invention;
Fig. 3 illustrates a block diagram of a battery system including a bus bar according to an embodiment of the present invention;
Fig. 4 illustrates a detailed top view of a bus bar including a relay in an OFF state according to an embodiment of the present invention;
Fig. 5 illustrates a detailed top view of the bus bar of FIG. 4 including a relay in an ON state;
Fig. 6 illustrates a detailed top view of the first terminal of the bus bar of Fig. 4.

### Detailed Description of the Invention

Reference will now be made in detail to embodiments, examples of which are illustrated in the accompanying drawings. Effects and features of the exemplary embodiments, and implementation methods thereof will be described with reference to the accompanying drawings. In the drawings, like reference numerals denote like elements, and redundant descriptions are omitted. The present invention, however, may be embodied in various different forms, and should not be construed as being limited to only the illustrated embodiments herein. Rather, these embodiments are provided as examples so that this disclosure will be thorough and complete, and will fully convey the aspects and features of the present invention to those skilled in the art.

Accordingly, processes, elements, and techniques that are not considered necessary to those having ordinary skill in the art for a complete understanding of the aspects and features of the present invention may not be described. In the drawings, the relative sizes of elements, layers, and regions may be exaggerated for clarity. As used herein, the terms of a singular form may include plural forms unless the context clearly indicates otherwise.

It will be understood that although the terms "first" and "second" are used to describe various elements, these elements should not be limited by these terms. These terms are only used to distinguish one element from another element. For example, a first element may be named a second element and, similarly, a second element may be named a first element, without departing from the scope of the present invention. As used herein, the term "and/or" includes any and all combinations of one or more of the associated listed items. Expressions such as "at least one of," when preceding a list of elements, modify the entire list of elements and do not modify the individual elements of the list.

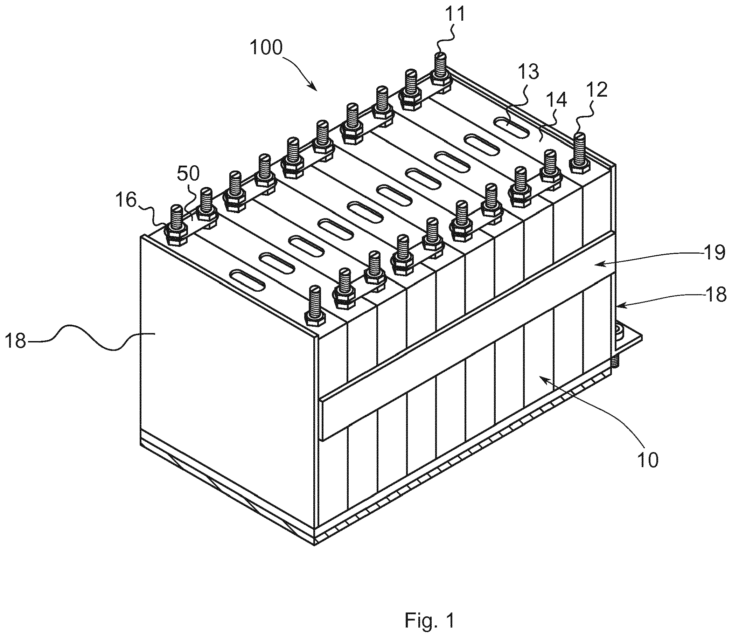

Figure 1 illustrates a battery system including a conventional bus bar. A battery module 100 includes a plurality of battery cells 10 aligned in one direction. A pair of end plates 18 are provided to face wide surfaces of the battery cells 10 at the outside of the battery cells 10, and a connection plate 19 is configured to connect the pair of end plates 18 to each other thereby fixing the plurality of battery cells 10 together.

Here, each battery cell 10 is a prismatic (or rectangular) cell, the wide flat surfaces of the cells being stacked together to form the battery module 100, however the present invention is not limited thereto and battery cells of different forms may be used. Further, each battery cell 10 includes a battery case configured for accommodation of an electrode assembly and an electrolyte. The battery case is hermetically sealed by a cap assembly 14. The cap assembly 14 is provided with positive and negative electrode terminals 11 and 12 having different polarities, and a vent 13. The vent 13 is a safety means of the battery cell 10, which acts as a passage through which gas generated in the battery cell 10 is exhausted to the outside of the battery cell 10. The positive and negative electrode terminals 11 and 12 of neighboring battery cells 10 are electrically connected through a conventional bus bar 50, and the bus bar 50 may be fixed by a nut 16 or the like.

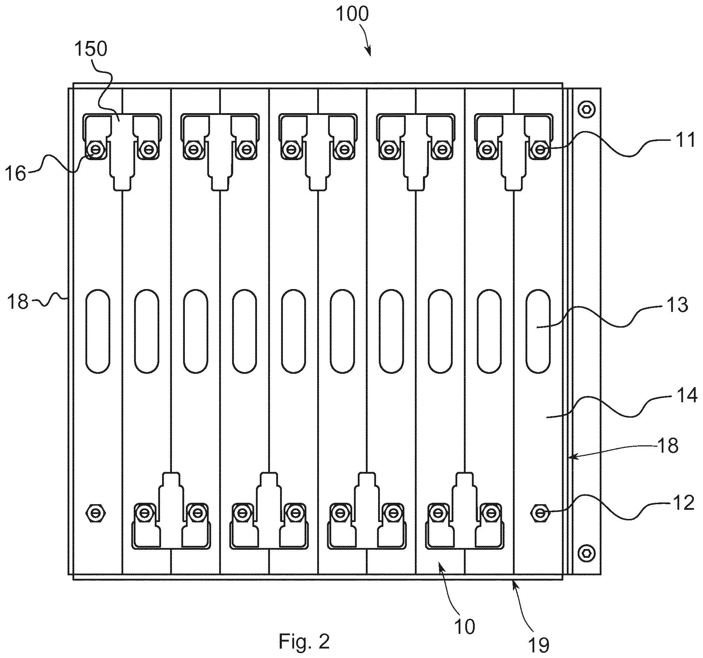

Fig. 2 illustrates a top view of a battery system analogous to the battery system shown in Fig. 1, wherein the bus bars 150 include a relay that can switch between and ON state and an OFF state according to an embodiment of the present invention.

Although in the exemplary embodiment of Fig. 2, a plurality of bus bars 150 between positive and negative electrode terminals 11 and 12 of neighboring battery cells 10 is used for connecting the battery cells 10 in series, other configurations are possible and a bus bar may be used for connecting two or more positive (or negative) electrode terminals of neighboring battery cells 10 in parallel.

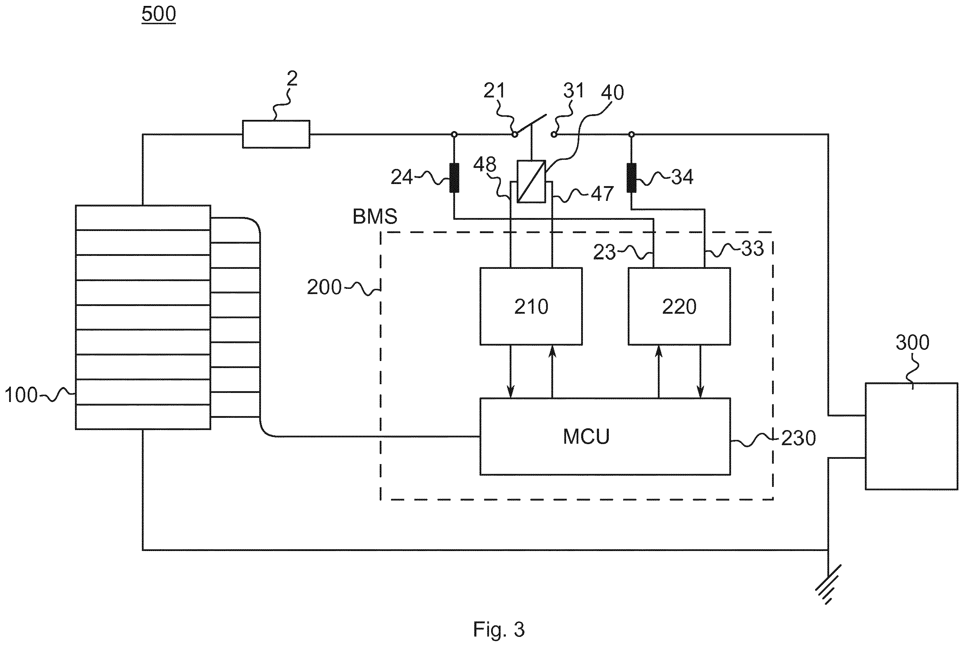

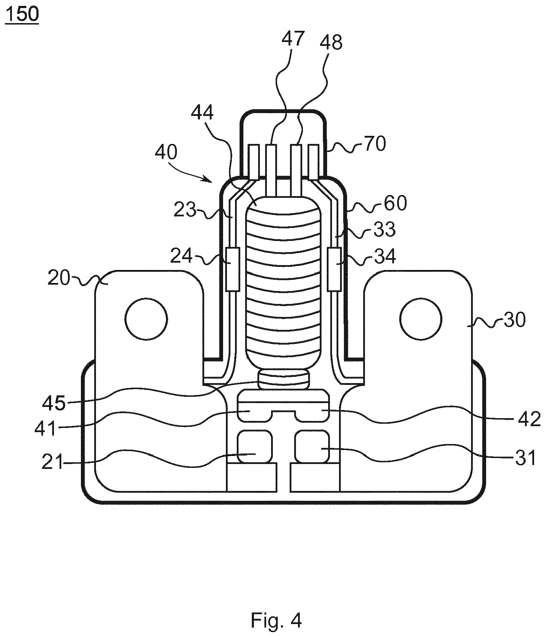

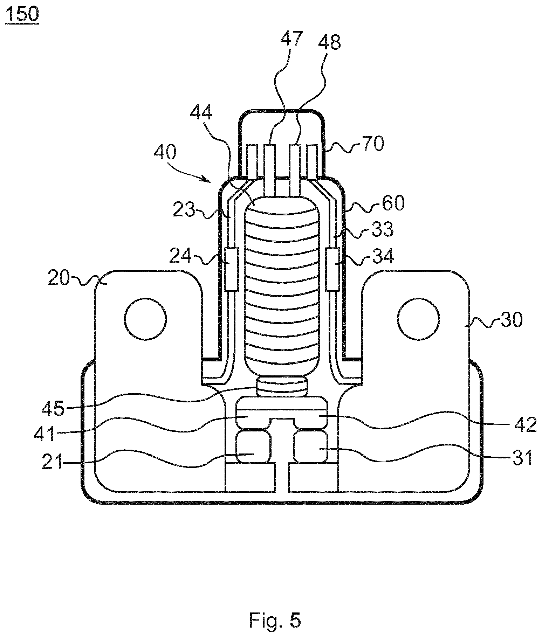

Figure 3 shows a block diagram of a battery system 500 including a battery module 100, wherein at least one bus bar 150 of the plurality of bus bars includes a relay 40 according to an embodiment of the present invention. Figures 4 and 5 show schematic top views of a bus bar 150 according to the present invention.

The bus bar 150 comprises a first bar element 20 and a second bar element 30 separated from each other, wherein each of the first bar element 20 and the second bar element 30 are adapted to be electrically connected with one of the positive and negative electrode terminals 11 and 12 of a battery cell 10. Particularly, each of the first bar element 20 and the second bar element 30 has a size and shape that is fitted to the size and shape of one cell terminal 11, 12. The first bar element 20 and the second bar element 30 comprise a conductive material, for instance, the first bar element 20 and the second bar element 30 may comprise a metal, such as aluminum or copper.

The bus bar 150 comprises a first contact section 21 (or first fixed contact) electrically coupled to the first bar element 20 and extending in a direction toward the second bar element 30 and a second contact section 31 (or second fixed contact) electrically coupled to the second bar element 30 and extending in a direction toward the first bar element 20, wherein the first contact section 21 and the second contact section 31 are spaced away from each other.

Accordingly, the first bar element 20 and the second bar element 30 of the bus bar 150 are electrically disconnected from each other in an "open state" configuration and the electrical connection between the first bar element 20 and the second bar element 30 is realized by means of a relay 40.

The relay 40 is located between the first bar element 20 and the second bar element 30 and is configured to connect the first bar element 20 and the second bar element 30 when the relay 40 is in an ON state (or closed state) and to disconnect the first bar element 20 from the second bar element 30 when the relay 40 is in an OFF state (or open state). Thus, the relay works as a switch between the first bar element 20 and the second bar element 30 of the bus bar 150.

Referring to Fig. 4, the structure of the relay 40 in an OFF state according to the present invention is shown in detail. The relay 40 comprises a coil 44, a spring 45 attached to the coil 44, movable contacts 41, 42 connected to the spring 45 and having a shape corresponding to the shape of the first and second contact sections 21 and 31, respectively, and a pair of coil controlling pins 47, 48 for driving the relay. The relay 40 further comprises a relay case 60 accommodating the coil 44, the spring 45, and the movable contacts 41, 42. Furthermore, a connector part 70 may be provided to accommodate the coil controlling pins 47, 48. The connector part 70 may be provided between the relay case 60 and the battery management system 200 to protect the thin coil controlling pins 47, 48 and prevent breakage of the pins.

Referring to Fig. 5, the structure of the relay 40 in an ON state according to the present invention is shown in detail. In an ON state of the relay 40, the coil controlling pins 47, 48 supply a certain current to the coil 44, which extends, thus moving the movable contacts 41, 42 toward the contact sections 21, 31 and closing the connection between the first bar element 20 and the second bar element 30 of the bus bar 150. In this configuration, the bus bar 150 works as a conventional bus bar between the two corresponding cell terminals connected to the bus bar 150.

In an OFF state of the relay 40, the current supply to the coil 44 via the coil controlling pins 47, 48 is stopped, the movable contacts 41, 42 move back to the initial position, i.e. away from the contact sections 21, 31, and the connection between the first bar element 20 and the second bar element 30 of the bus bar 150 is interrupted. For instance, the relay 40 may be switched OFF to protect the power interface of the battery system 500, when abnormal operating conditions occur, e.g. when a current overload is detected by a control unit of the battery system 500.

Referring to the block diagram of Fig. 3, a battery module 100 comprising at least one bus bar 150 is shown, which is connected to a battery management system (BMS) monitoring the battery cells 10 and controlling the operations of the battery system 500, and which is adapted to supply power to an external load 300. A relay switch 40 is provided along the bus bar 150 for connecting the bus bar during normal operation conditions of the battery and for disconnecting the bus bar when abnormal operation conditions occur. A fuse 2 is further provided between the relay 40 and the battery module 100 to enhance the functionality of the protection system. The coil controlling pins 47, 48 of the relay 40 are connected to a relay control device 210 for driving the relay 40, i.e. for switching the relay 40 ON/OFF. The relay control device 210 is adapted to exchange information with the main control unit (MCU) 230 of the battery management system 200, which monitors the state of the battery cells 10.

When a non-permissible operating condition occurs, e.g. when a current overload is detected by the main control unit 430, this sends a signal to relay control device 210 to switch off the relay 40, thus protecting the power interface of the battery system.

During normal operation of the battery system the relay-based switch is turned on, so that the relay 40 always consumes current. Because of the prolonged use of the relay 40 during normal operation, the mechanical parts of a relay are failure-prone and provide only a limited lifetime. In case the relay 40 breaks down, the power supply of the battery system 500 will be interrupted. It is therefore necessary to monitor the proper functioning of the relay 40.

To this aim a pair of monitoring pins 23, 33 are provided for monitoring the state of the relay 40. The monitoring pins 23, 33 electrically connect the first bar element 20 and the second bar element 30, respectively, of the bus bar 150 with a relay monitoring device 220 included in the battery management system 200.

The relay monitoring device 220 measures the voltages at the first and second monitoring pins 23 and 33, which correspond to the voltages at the first and second bar elements 20, 30.

When the relay 40 is ON, the first bar element 20 is electrically connected to the second bar element 30. Thus, the voltages measured by the monitoring pins 23, 33 must also be the same, if the relay 40 is working properly.

On the contrary, if the relay monitoring device 220 measures different voltages at the first and second monitoring pins 23 and 33 while the relay is ON - i.e. while the coil controlling pins 47, 48 supply a current to the relay 40 - it means that the relay 40 is damaged. In this case a damaged relay signal is generated by the relay monitoring device 220 and sent to the main control unit 240.

The monitoring pins 23, 33 are usually formed as two small bus bars respectively attached to the first bar element 20 and the second bar element 30 of the bus bar 150. When monitoring pins or wires are directly welded between a bar element of the bus bar 150 and a printed circuit board (PCB) comprising the battery management system 200, breakage of the exposed wires may occur, so that the electrical connection is interrupted and the monitoring of the relay 40 is rendered impossible.

In order to protect the monitoring pins 23, 33 without requiring additional space inside the battery system, the monitoring pins 23, 33 are accommodated inside the relay case 60 and the connector part 70. However, because they are accommodated nearby the coil controlling pins 47, 48, a short-circuit between the coil controlling pins 47, 48 and the monitoring pins 23, 33, may occur. In fact, while the coil controlling pins 47, 48 for driving the relay 40 usually have a relatively low voltage (e.g. 12 V or less), the monitoring pins 23, 33, which are attached to the bus bar 150, may have higher voltages up to 60V or more.

A short-circuit between monitoring pins 23, 33 and coil controlling pins 47, 48 may therefore damage the printed circuit board comprising the control electronics.

To prevent damage to the electronics, resistors 24, 34 are installed along the monitoring pins 23, 33, so to limit the current going through the monitoring pins 23, 33.

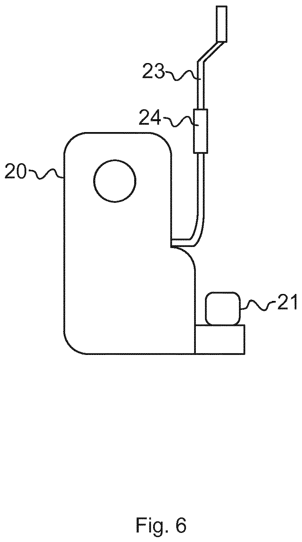

Fig. 6 shows a detailed top view of the first bar element 20 and the first monitoring pin 23 attached to the first bar element 20. In an analogous way the second monitoring pin 33 is attached to the second bar element 30 of the bus bar 150. A resistor 24 is assembled along the first monitoring pin 23. For instance, the resistor 24 may be soldered to the monitoring pin 23, although different methods may be used for assembling the resistor 23.

To effectively limit the current going through the monitoring pin, the resistor may have a resistance greater than 10 KΩ. Furthermore, the tolerance of the resistance value may not exceed 1% in order not to limit the sensing of the monitoring pins 23, 33 so that an accurate voltage measurement can be achieved.

The resistors used are automotive specified and approved (AECQ qualified). In particular, wirewound resistors are used, which in case of failure transit to an open state, thus interrupting the connection. The resistors may be standard resistors or customized resistors depending on the requirements.

According to the present invention, resistors assembled along the monitoring pins are used for limiting the current flowing through the monitoring pins, thereby preventing damage to the control electronics in case of short-circuit between the monitoring pins and the coil controlling pins for driving the relay. This solution is cost-effective and requires no additional wire harnesses.

## Claims

1. A bus bar (150) for a battery module (100), comprising:
a first bar element (20) and a second bar element (30) spaced apart from each other;
a first contact (21) electrically connected to the first bar element (20) and a second contact (31) electrically connected to the second bar element (30) and spaced apart from the first contact (21);
a relay (40) configured to control a connection between the first and second contacts (21, 31); and
a first monitoring pin (23) electrically coupled to the first bar element (20) and a second monitoring pin (33) electrically coupled to the second bar element (30);
wherein each of the first and second monitoring pins (23, 33) comprises a resistor (24, 34) located between a first end and a second end of the monitoring pin (23, 33).

2. The bus bar (150) according to claim 1, wherein the relay (40) comprises:
a coil (44);
movable contacts (41, 42) connected to the coil (44) and adapted to be moved by the coil (44), wherein the movable contacts (41, 42) are electrically connected to each other;
a couple of coil controlling pins (47, 48) for driving the relay (40) between the closed position and the open position;
wherein in a closed position the movable contacts (41, 42) are respectively connected to the first and second contacts (21, 31) and in an open position the movable contacts (41, 42) are electrically disconnected from the first and second contacts (21, 31).

3. The bus bar (150) according to claim 2, further comprising a relay case (60) accommodating the relay (40) and a connector part (70) connected to the relay case (60) and accommodating the coil controlling pins (47, 48),
wherein the monitoring pins (23, 33) are located inside the relay case (60) and the connector part (70).

4. The bus bar (150) according to one of the preceding claims, wherein the resistors (24, 34) have a resistance value greater than 10 KΩ and smaller than 20 KΩ

5. The bus bar (150) according to claim 4, wherein the resistance value of the resistors (24, 34) has a tolerance smaller than or equal to 1%.

6. The bus bar (150) according to any one of the preceding claims, wherein the resistors (24, 34) are wirewound resistors.

7. The bus bar (150) according to any one of the preceding claims, wherein the resistors (24, 34) are configured to fuse and transit to an open state in case of short circuit.

8. A battery system (500), comprising:
a battery module (100) comprising a plurality of battery cells (10), each battery cell (10) having a first cell terminal (11) of a first polarity and a second cell terminal (12) of a second polarity;
at least one bus bar (150) according to any one of the claims 1 to 7 for electrically interconnecting at least two of the plurality of battery cells (10);
a battery management system (BMS) for monitoring the plurality of battery cells (10) and driving the battery module (100);
wherein the first and second monitoring pins (23, 33) are connected to a printed circuit board (PCB) comprised in the battery management system (BMS) and wherein the battery management system (BMS) is configured to drive the relay (40) to monitor the state of the relay (40) via the monitoring pins (23, 33).

9. The battery system of claim 8, wherein the first bar element (20) of the bus bar (150) is electrically connected to one of the first and second cell terminals (11, 12) of a first battery cell of the plurality of battery cells (10) and the second bar element (30) of the bus bar (150) is electrically connected to the other one of the first and second cell terminals (11, 12) of a second battery cell of the plurality of battery cells (10).

10. The battery system of one of claims 8 and 9, wherein the battery management system (BMS) comprises:
a relay driver (210) connected to the coil controlling pins (47, 48) for driving the relay (40) between an open state and a closed state;
a relay monitoring system (220) connected to the monitoring pins (23, 33) for monitoring the proper functioning of the relay (40); and
a main control unit (230) for controlling both the relay driver (210) and the relay monitoring system (220).

11. The battery system of claim 10, wherein the relay monitoring system (220) is adapted to measure a voltage difference between the first monitoring pin (23) and the second monitoring pin (33).

12. The battery system of claim 11, wherein the relay monitoring system (220) is adapted to generate a relay failure signal and to send the relay failure signal to the main control unit (230) when the relay (40) is in a closed state and the voltage of the first monitoring pin (23) is different from the voltage of the second monitoring pin (33).

## Patentansprüche

1. Sammelschiene (150) für ein Batteriemodul (100), aufweisend:
ein erstes Schienenelement (20) und ein zweites Schienenelement (30), welche voneinander beabstandet angeordnet sind;
einen ersten Kontakt (21), welcher mit dem ersten Schienenelement (20) elektrisch verbunden ist, und einen zweiten Kontakt (31), welcher mit dem zweiten Schienenelement (30) elektrisch verbunden und vom ersten Kontakt (21) beabstandet angeordnet ist;
ein Relais (40), welches dafür ausgelegt ist, eine Verbindung zwischen dem ersten und dem zweiten Kontakt (21, 31) zu steuern; und
einen ersten Überwachungsstift (23), welcher mit dem ersten Schienenelement (20) elektrisch gekoppelt ist, und einen zweiten Überwachungsstift (33), welcher mit dem zweiten Schienenelement (30) elektrisch gekoppelt ist;
wobei sowohl der erste als auch der zweite Überwachungsstift (23, 33) jeweils einen Widerstand (24, 34) angeordnet zwischen einem ersten Ende und einem zweiten Ende des Überwachungsstifts (23, 33) aufweist.

2. Sammelschiene (150) nach Anspruch 1, wobei das Relais (40) aufweist:
eine Spule (44);
bewegliche Kontakte (41, 42), welche mit der Spule (44) verbunden und dafür ausgelegt sind, durch die Spule (44) bewegt zu werden, wobei die beweglichen Kontakte (41, 42) elektrisch miteinander verbunden sind;
ein Paar von Spulensteuerungsstiften (47, 48) zum Antreiben des Relais (40) zwischen der geschlossenen Position und der geöffneten Position;
wobei in einer geschlossenen Position die beweglichen Kontakte (41, 42) mit dem ersten beziehungsweise dem zweiten Kontakt (21, 31) verbunden sind, und in einer geöffneten Position die beweglichen Kontakte (41, 42) vom ersten und vom zweiten Kontakt (21, 31) elektrisch getrennt sind.

3. Sammelschiene (150) nach Anspruch 2, ferner aufweisend ein Relaisgehäuse (60), in welchem das Relais (40) untergebracht ist, und einen Verbindungsteil (70), welcher mit dem Relaisgehäuse (60) verbunden ist und in welchem die Spulensteuerungsstifte (47, 48) untergebracht sind,
wobei die Überwachungsstifte (23, 33) innerhalb des Relaisgehäuses (60) und des Verbindungsteils (70) angeordnet sind.

4. Sammelschiene (150) nach einem der vorstehenden Ansprüche, wobei die Widerstände (24, 34) einen Widerstandswert von mehr als 10 KΩ und weniger als 20 KΩ aufweisen.

5. Sammelschiene (150) nach Anspruch 4, wobei der Widerstandswert der Widerstände (24, 34) eine Toleranz kleiner oder gleich 1 % aufweist.

6. Sammelschiene (150) nach irgendeinem der vorstehenden Ansprüche, wobei die Widerstände (24, 34) Drahtwiderstände sind.

7. Sammelschiene (150) nach irgendeinem der vorstehenden Ansprüche, wobei die Widerstände (24, 34) dafür ausgelegt sind, im Fall eines Kurzschlusses durchzuschmelzen und in einen geöffneten Zustand überzugehen.

8. Batteriesystem (500), aufweisend:
ein Batteriemodul (100) aufweisend eine Mehrzahl von Batteriezellen (10), jede der Batteriezellen (10) aufweisend einen ersten Zellenanschluss (11) mit einer ersten Polarität und einen zweiten Zellenanschluss (12) mit einer zweiten Polarität;
mindestens eine Sammelschiene (150) nach irgendeinem der Ansprüche 1 bis 7 zum elektrischen Verbinden von mindestens zwei der Mehrzahl von Batteriezellen (10);
ein Batterieverwaltungssystem (BMS) zum Überwachen der Mehrzahl von Batteriezellen (10) und zum Ansteuern des Batteriemoduls (100);
wobei der erste und der zweite Überwachungsstift (23, 33) mit einer gedruckte Schaltungsplatte (PCB), welche im Batterieverwaltungssystem (BMS) enthalten ist, verbunden sind, und wobei das Batterieverwaltungssystem (BMS) dafür ausgelegt ist, das Relais anzusteuern (40), um den Zustand des Relais (40) über die Überwachungsstifte (23, 33) zu überwachen.

9. Batteriesystem nach Anspruch 8, wobei das erste Schienenelement (20) der Sammelschiene (150) entweder mit dem ersten oder dem zweiten Zellenanschluss (11, 12) einer ersten Batteriezelle der Mehrzahl von Batteriezellen (10) elektrisch verbunden ist, und das zweite Schienenelement (30) der Sammelschiene (150) mit dem anderen des ersten oder des zweiten Zellenanschlusses (11, 12) einer zweiten Batteriezelle der Mehrzahl von Batteriezellen (10) elektrisch verbunden ist.

10. Batteriesystem nach einem der Ansprüche 8 und 9, wobei das Batterieverwaltungssystem (BMS) aufweist:
einen Relaistreiber (210), welcher mit den Spulensteuerungsstiften (47, 48) verbunden ist, um das Relais (40) zwischen einem geöffneten Zustand und einem geschlossenen Zustand anzutreiben;
ein Relaisüberwachungssystem (220), welches mit den Überwachungsstiften (23, 33) verbunden ist, um die ordnungsgemäße Funktion des Relais (40) zu überwachen; und
eine Hauptsteuereinheit (230) zum Steuern sowohl des Relaistreibers (210) als auch des Relaisüberwachungssystems (220).

11. Batteriesystem nach Anspruch 10, wobei das Relaisüberwachungssystem (220) dafür ausgelegt ist, eine Spannungsdifferenz zwischen dem ersten Überwachungsstift (23) und dem zweiten Überwachungsstift (33) zu messen.

12. Batteriesystem nach Anspruch 11, wobei das Relaisüberwachungssystem (220) dafür ausgelegt ist, ein Relaisausfallsignal zu erzeugen und das Relaisausfallsignal an die Hauptsteuereinheit (230) zu senden, wenn sich das Relais (40) in einem geschlossenen Zustand befindet und sich die Spannung des ersten Überwachungsstifts (23) von der Spannung des zweiten Überwachungsstifts (33) unterscheidet.

## Revendications

1. Barre omnibus (150) destinée à un module de batterie (100), comprenant :
un premier élément de barre (20) et un second élément de barre (30) espacés l'un de l'autre ;
un premier contact (21) relié électriquement au premier élément de barre (20) et un second contact (31) relié électriquement au second élément de barre (30) et espacé du premier contact (21) ;
un relais (40) configuré pour contrôler une connexion entre le premier et le second contacts (21, 31) ; et
une première broche de surveillance (23) reliée électriquement au premier élément de barre (20) et une seconde broche de surveillance (33) reliée électriquement au second élément de barre (30) ;
dans laquelle chacune de la première et de la seconde broches de surveillance (23, 33) comprend une résistance (24, 34) située entre une première extrémité et une seconde extrémité de la broche de surveillance (23, 33).

2. Barre omnibus (150) selon la revendication 1, dans laquelle le relais (40) comprend :
une bobine (44) ;
des contacts mobiles (41, 42) reliés à la bobine (44) et adaptés pour être déplacés par la bobine (44), où les contacts mobiles (41, 42) sont reliés électriquement l'un à l'autre ;
une paire de broches de commande de bobine (47, 48) destinées à faire basculer le relais (40) entre la position fermée et la position ouverte ;
dans laquelle, dans une position fermée, les contacts mobiles (41, 42) sont respectivement reliés au premier et au second contacts (21, 31) et, dans une position ouverte, les contacts mobiles (41, 42) sont électriquement débranchés du premier et du second contacts (21, 31).

3. Barre omnibus (150) selon la revendication 2, comprenant en outre un boîtier de relais (60) qui contient le relais (40) et une partie de connecteur (70) reliée au boîtier de relais (60) et qui contient les broches de commande de bobine (47, 48),
dans laquelle les broches de surveillance (23, 33) se trouvent à l'intérieur du boîtier de relais (60) et de la partie de connecteur (70).

4. Barre omnibus (150) selon l'une des revendications précédentes, dans laquelle les résistances (24, 34) possèdent une valeur de résistance supérieure à 10 KΩ et inférieure à 20 KΩ.

5. Barre omnibus (150) selon la revendication 4, dans laquelle la valeur de résistance des résistances (24, 34) présente une tolérance inférieure ou égale à 1 %.

6. Barre omnibus (150) selon l'une quelconque des revendications précédentes, dans laquelle les résistances (24, 34) sont des résistances bobinées.

7. Barre omnibus (150) selon l'une quelconque des revendications précédentes, dans laquelle les résistances (24, 34) sont configurées pour fondre et passer à un état ouvert en cas de court-circuit.

8. Système de batterie (500), comprenant :
un module de batterie (100) comprenant une pluralité d'éléments de batterie (10), chaque élément de batterie (10) ayant une première borne d'élément (11) d'une première polarité et une seconde borne d'élément (12) d'une seconde polarité ;
au moins une barre omnibus (150) selon l'une quelconque des revendications 1 à 7 destinée à relier électriquement au moins deux de la pluralité d'éléments de batterie (10) ;
un système de gestion de batterie (BMS) destiné à surveiller la pluralité d'éléments de batterie (10) et à attaquer le module de batterie (100) ;
dans lequel les première et seconde broches de surveillance (23, 33) sont reliées à une carte de circuit imprimé (PCB) comprise dans le système de gestion de batterie (BMS), et dans lequel le système de gestion de batterie (BMS) est configuré pour attaquer le relais (40) afin de surveiller l'état du relais (40) via les broches de surveillance (23, 33).

9. Système de batterie selon la revendication 8, dans lequel le premier élément de barre (20) de la barre omnibus (150) est relié électriquement à l'une des première et seconde bornes d'élément (11, 12) d'un premier élément de batterie de la pluralité d'éléments de batterie (10), et le second élément de barre (30) de la barre omnibus (150) est relié électriquement à l'autre des première et seconde bornes de élément (11, 12) d'un second élément de batterie de la pluralité d'éléments de batterie (10).

10. Système de batterie selon l'une des revendications 8 et 9, dans lequel le système de gestion de batterie (BMS) comprend :
un dispositif d'excitation de relais (210) relié aux broches de commande de bobine (47, 48) afin de faire passer le relais (40) entre un état ouvert et un état fermé ;
un système de surveillance de relais (220) relié aux broches de surveillance (23, 33) afin de surveiller le bon fonctionnement du relais (40) ; et
une unité de commande principale (230) destinée à contrôler le dispositif d'excitation de relais (210) et le système de surveillance de relais (220).

11. Système de batterie selon la revendication 10, dans lequel le système de surveillance de relais (220) est adapté pour mesurer une différence de tension entre la première broche de surveillance (23) et la seconde broche de surveillance (33).

12. Système de batterie selon la revendication 11, dans lequel le système de surveillance de relais (220) est adapté pour générer un signal de défaillance de relais et pour envoyer le signal de défaillance de relais à l'unité de commande principale (230) lorsque le relais (40) se trouve dans un état fermé et la tension de la première broche de surveillance (23) est différente de la tension de la seconde broche de surveillance (33).
